# EUROPEAN PATENT APPLICATION

(11) **EP 2 845 671 A1**
(43) Date of publication of application: **11.03.2015**
(21) Application number: 13183062.2
(22) Date of filing: 05.09.2013
(51) Int. Cl.: B22F 9/08, B01J 2/06, B22F 9/10

(54) **Granulation of molten material**

(71) Applicant: Uvån Holding AB, 183 57 Täby (SE)
(72) Inventor: Lundström, Per-Åke, 183 57 Täby (SE)
(74) Representative: Johansson, Lars E.

(57) **Abstract**

The invention relates to a granulated material having an improved size distribution and a method and apparatus for the production of such a granular material. The grain size and grain size distribution is controlled by the use of a rotating distributor. The rotating distributor comprises an upper inlet opening, sidewalls, a bottom and at least one row of openings at the lower end of the sidewalls, wherein the openings in the sidewalls have a size of at least 5 mm in the smallest dimension.

## Description

### TECHNICAL FIELD

The invention relates to a granulated material having an improved size distribution and a method and apparatus for the production of such a granular material.

### BACKGROUND OF THE INVENTION

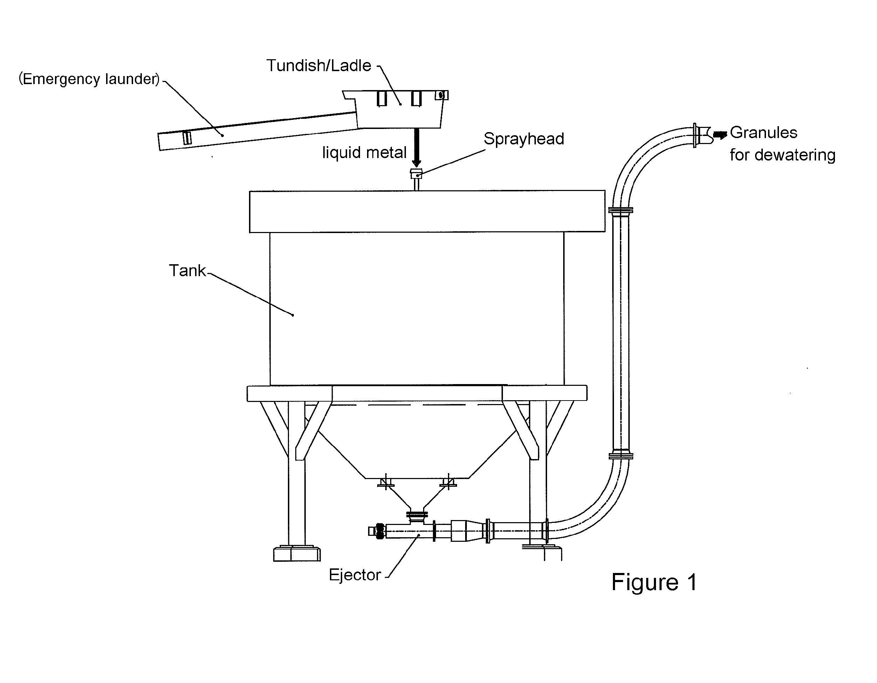

Metal granulation in water is a well-established method for rapid solidification of liquid metal into a medium sized product form. The Granshot® process has been developed for the direct production of ready to use material for the steel industry. The known apparatus is disclosed in Fig. 1. The molten metal is directed from a tundish to a refractory target, which is denoted spray head in Fig 1. The metal strikes the target, split up and is radially distributed over the cooling water in the tank. The droplets solidify in the tank and are recovered from the bottom of the tank. The size of the granules depends on several factors such as melt composition and impact conditions. The main fraction obtained lies within the size range of 5-25 mm. However, the amount of fines defined as the granules having a maximum dimension of ≤ 8mm may be as high as 20 %. The principles of this method are disclosed in EP 402 665 and US 3 888 956.

US 4 402 884 discloses a method of granulating using a rotating disc. The main part of the granules obtained according to this method has a size of less than 10 mm.

Although the grain sizes obtained by the above mentioned method allow a rapid dissolution of the granular metal in a steel melt there is a drawback in that there are limited possibilities to adjust the mean grain size and the grain size distribution.

EP 522 844 discloses a method of producing metal granules by pouring a metal stream into a liquid cooling bath. US 6287362 discloses a method of producing metal lumps having a characteristic dimension of 20 - 100 mm by introducing a molten metal stream into a stream of water. Drawbacks associated with these methods are long dissolution times for the coarse material and a wide particle size distribution.

### SUMMARY OF THE INVENTION

The general object of the present invention is to provide a granulated material having an improved size distribution.

Another object is to provide an apparatus and a method for making such an improved granulated material. In particular, it should be possible to obtain a mean size that allows a rapid dissolution, when the material is added to a melt.

It is also an object to further improve the Granshot® process in order to provide a material having a more narrow size distribution of the granules obtained. This and other objects are achieved by means of the apparatus, method and product defined in the independent claims.

Further advantageous embodiments of the invention have been specified in the dependent claims.

According to the invention the granulation is performed with the aid of a rotating distributor which comprises an upper inlet opening, sidewalls, a bottom and at least one row of openings at the lower end of the sidewalls, wherein the openings in the sidewalls have a size of at least 5 mm in the smallest dimension.

### BRIEF DESCRIPTION OF THE FIGURES

In the following, the invention will be described in more detail with reference to the preferred embodiments and the appended drawings.
Fig. 1 is a schematic drawing of the apparatus used in the Granshot® process.
Fig. 2 is a schematic drawing of one embodiment of the present invention in which a rotating tundish is used.
Fig. 3 discloses the size distribution of the granules of the invention obtained in Example 1 wherein the ferronickel contained 32 %Ni and 0.1 %Si.
Fig 4 discloses the size distribution of the granules of the comparative method wherein the ferronickel contained 32 %Ni and 0.1 %Si.
Fig 5 discloses the size distribution of the granules of Example 1 wherein the ferronickel contained 32 %Ni and 0.27 %Si.
Fig 6 discloses the size distribution of the granules of the comparative method wherein the ferronickel contained 32 %Ni and 0.27 %Si.

### DETAILED DESCRIPTION OF THE INVENTION

The present invention will now be described in detail with reference to the attached drawings.

The apparatus for producing the granulated material comprises:
a) a cooling tank containing a cooling fluid,
b) a means for feeding the liquid material to a rotating distributor,
c) a rotating distributor positioned above the cooling tank,
d) the rotating distributor comprises an upper inlet opening, sidewalls, a bottom and at least one row of openings at the lower end of the sidewalls, wherein the openings in the sidewalls have a size of at least 5 mm in the smallest dimension.

The means for feeding the liquid material to the rotating distributor is positioned above the tank, preferably the tank is provided with cylindrical sidewalls and the feeding means is positioned at the centreline of said cylindrical sidewalls. The distributor maybe made of a refractory material like alumina, magnesia or dolomite.

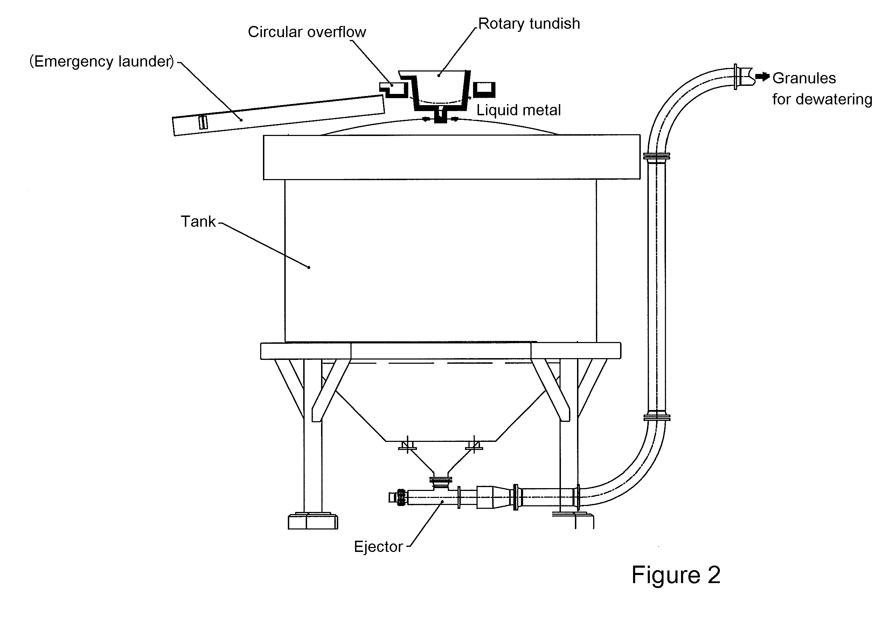

In one embodiment the rotating distributor comprises a tundish and an elongated nozzle attached thereto as shown in Fig. 2.

The elongated nozzle preferably has only one row of openings therein. The basic design of the nozzle is similar to that of an immersion nozzle used for continuous casting of steel.

In another embodiment the rotating distributor comprises a pot attached to a rotating means provided within the tank, the rotating pot has cylindrical sidewalls and, preferably, only one row of opening in the sidewalls and optionally an annular top flange.

Optionally, the apparatus is provided with at least one of the following features:
- Means for circulating cooling water in the tank, preferably in the same or opposite direction with respect to the rotating means.
- Means for adjusting the height of the rotating distributor in relation to the upper level of the cooling fluid in the cooling tank. The height may be fixed or varied during the granulation.
- Means for removing the granulated material from the cooing tank. Preferably, an ejector of the type described in WO2009/157857 is used.
- Means for controlling the rotation of the distributor within the range of 1-50 rpm. Any type of motor may be used for this purpose.
- Means for regulating the flow of liquid material from the feeding means to the distributor. These means include stopper rods and sliding gates. The regulation can be made manually or fully automatically.
- Circular openings at the lower end of the sidewalls having a diameter of 10-30 mm, preferably 12-20 mm. The size and number of the openings depend on the design capacity i.e. tonnes per minute.
- Elliptical openings having a height to with ratio (h/w) in the range of from 1:1.2 to 1:10. By adjusting the form of the opening it is possible to adjust the form of the molten stream leaving the distributor. A wider opening results in a more film-like stream, thereby the size and shape of the granules may be influenced.
- One row of openings and, preferably, not more than 4 openings in said single row. This design is the most simple to produce and the method is easy to control. It is therefore a preferred design.
- Openings directed 5°- 45° upwards. By this measure it is possible to adjust the path and the time in the air before the stream hits the cooling liquid. Also the spread of the molten stream over the cooling bath is influenced by the parabolic flight.
- Openings directed 0° - 45°downwards. By directing one or more streams downwards it is possible to shorten the flight distance, reduce the risk of disintegration of the steam before it hits the cooling bath and influences the spread over the cooling bath.
- An intermediate receptor or chute for supplying the liquid material to the feeding means. This is an alternative design, which can be used e.g. when the molten alloy is supplied directly from a furnace without being tapped in a ladle.
- A refractory safety plate positioned below the long nozzle, which plate spreads the liquid stream over the cooling water surface in case of a nozzle breakage.

According to a preferred embodiment the means for feeding the liquid material to the rotating distributor is positioned above the tank, which is provided with cylindrical sidewalls. The feeding means is positioned at the centreline of said cylindrical sidewalls, the rotating distributor comprises a circular tundish and an elongated nozzle attached centrally thereto, the elongated nozzle has not more than 4 circular openings having a diameter of 10-20 mm in one row, optionally there is provided an intermediate receptor or a chute for supplying a controlled amount of liquid material to the tundish.

The apparatus may be provided with a weighing system for the tundish that automatically controls the level in the tundish in order to maintain a constant liquid head and thereby a constant flow rate through the nozzle. Alternatively, the automatic control system may include optical or electromagnetic sensors.

The method of producing granulated material by disintegrating liquid metal or slag comprises the steps of:
a) providing an apparatus according to any of the preceding claims,
b) rotating the distributor at a speed of 1- 50 rpm,
c) feeding the molten material to the rotating distributor,
d) distributing at least one stream of the molten material over the cooling fluid in the cooling tank,
e) disintegrating the molten material above and/or within the cooling liquid and forming at least partly solidified granules,
f) recovering the granulated material from the bottom of the cooling tank.

In a preferred embodiment the method for producing granulated material comprises at least one of the following features:
- Using water with or without additions as the cooling fluid. Water is normally used because of its availability. However, other cooling liquids may be used, in particular cooling liquids of the same type as used for hardening of steel such as higher alcohols like glycols. Naturally, it is possible to mix different additions with water to influence its density, viscosity, heat capacity and/or surface tension.
- Rotating the distributor at a speed of 1-10 rpm. A low rotation speed is easy to control and it would appear to have a positive influence on the confinement of molten stream.
- Feeding the molten material at a rate of 0.5 - 10 t/min, preferably 1-5 t/min. These feeding rates maybe applied in high capacity plants. However, lower feeding rates are possible for small units and for pilot plant applications.
- Circulating cooling water in the tank, preferably in the same or opposite direction with respect to the rotating means. By controlling the circulation of the cooling water in the tank it is possible to secure a uniform cooling. A water stream that is in the opposite direction to the stream from the rotating distributor results in a higher cooling rate but also to higher drag forces at the liquid interface. Hence, it may be possible to partly influence the geometrical form of the granules by controlling the direction and velocity of the cooling water.
- Adjusting the height distance between the cooling water in the tank to the openings in the rotating distributor to be 0.1-1.5 m. This design parameter can be used to adjust the radial distance from the distributor to the annular region, where the molten stream hits the cooling liquid as discussed in EP 402 665.
- Controlling the melt level in the tundish and/or in the rotating distributor by controlling the flow from the means for feeding the liquid material to a rotating distributor. This is made in order to control the liquid head and thereby also the liquid flow through the nozzle.
- Controlling the rate of granulation by controlling the level of the melt in the tundish and/or in the rotating distributor. This is a convenient method because an increased liquid head results in a higher flow through the nozzle.
- Recovering the solidified granules by discharging from the lower end of the tank using a water and air ejector. This method is disclosed in WO2009/157857 and is considered to be the most suitable method. However, it is also possible to use other methods for recovering the granulated material.

The granulated material is preferably a metal or alloy selected from the group of iron, pig iron, steel, ferroalloy, recycled steel dust, copper, zinc and aluminium.

According to a preferred embodiment, the material to be disintegrated is fed at a rate of 1-5 t/min to a rotating tundish provided with an elongated nozzle having one row of openings, wherein the number of openings preferably is 1-4, and the rate of granulation is controlled by controlling the level of the melt in the tundish.

The granulated material obtained with the inventive method has a narrow size distribution and typically a mean size in the range of 12-50 mm, preferably 15-25mm and wherein the amount of fines having a size of less than 6 mm can be limited to 5 %. The amount of fines having a size of less than 4 mm can be limited to less than 1 %.

The invention is not to be seen as limited by the embodiments described above, but can be varied within the scope of the claims, as will be understood by the person skilled in the art.

### EXAMPLES

In the following results obtained according to the invention are compared to results obtained with the known apparatus having a flat spray head. In all examples ferronickel was melted in an induction furnace and supplied to the tundish by use of a tapping spout. Tapping temperature was 1650 °C. The melt level in the tundish was manually controlled to be 300-400 mm. The nozzle diameter in the tundish was 27 mm. After completed granulation the granules were removed from the tank, dried, weighted and subjected to screening. Size classes used were < 4 mm, 4-8 mm, 8-12mm, 12-16 mm, 16-25 mm and > 25 mm. The results are given in % of the total weight.

### EXAMPLE 1

In this example the ferronickel contained 32 %Ni and 0.1 %Si.

The rotating distributor according to the invention had four holes in one single row. The four openings had a total opening area of 346 mm².

A rotation speed of 3 rpm was used in order to secure an uniform heat dissipation.

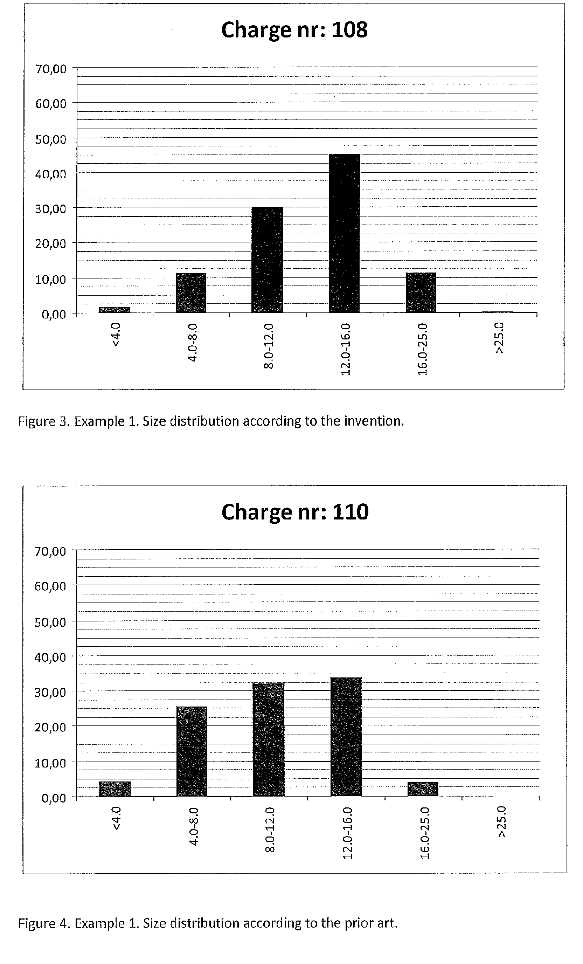

The size distribution of the granules obtained according to the invention is disclosed in Fig. 3 (Charge Nr. 108).

The size distribution of the granules obtained with a conventional flat spray head is shown in Fig. 4 (Charge Nr 110).

It is evident that the inventive apparatus resulted in an improved size distribution in that the amount of fines was reduced, the mean size was increased and the size distribution was improved.

### EXAMPLE 2

In this example the effect of an increased content of Si on the size distribution was examined.

The ferronickel contained 32%Ni and 0.27 %Si. The granulation conditions were the same as for Example 1.

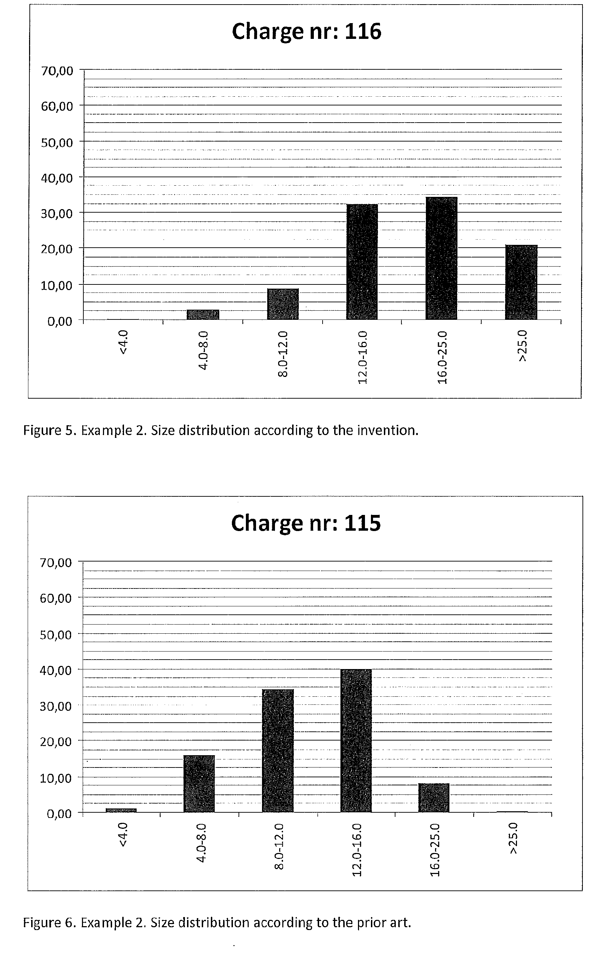

The size distribution of the granules obtained according to the invention is disclosed in Fig. 5 (Charge Nr. 116).

The size distribution of the granules obtained with a conventional flat spray head is shown in Fig. 6 (Charge Nr 115).

An improved size distribution was achieved in both cases.

The result for the conventional spray head was as expected, since it is known that Si has a positive influence on the size distribution. A comparison between Charge Nr. 115 and Charge Nr 110 reveals that the increased Si content resulted in less fines and an improved size distribution.

However, the increased content of Si turned out to have a remarkable effect on the size distribution obtained with inventive apparatus. A comparison of Charge Nr. 116 and Charge Nr. 115 reveals that the amount of fines was virtually eliminated and the mean size of the granules was very much increased.

### INDUSTRIAL APPLICABILITY

The invention is particular suited for application in the ferroalloy-, iron- and steel-industries.

## Claims

1. An apparatus for producing a granulated material having a means size of at least 5 mm by disintegrating a liquid, the apparatus comprises:
a) a cooling tank containing a cooling fluid,
b) a means for feeding the liquid material to a rotating distributor,
c) a rotating distributor positioned above the cooling tank,
d) the rotating distributor comprises an upper inlet opening, sidewalls, a bottom and at least one row of openings at the lower end of the sidewalls, wherein the openings in the sidewalls have a size of at least 5 mm in the smallest dimension.

2. An apparatus according to claim 1 wherein the means for feeding the liquid material to the rotating distributor is positioned above the tank, preferably the tank is provided with cylindrical sidewalls and the feeding means are positioned at the centreline of said cylindrical sidewalls.

3. An apparatus according to claim 1 or 2 wherein the rotating distributor comprises a tundish and an elongated nozzle attached thereto, wherein the elongated nozzle preferably has only one row of openings therein.

4. An apparatus according to any of claims 1 and 2 wherein the rotating distributor comprises a pot attached to a rotating means provided within the tank, the rotating pot has cylindrical sidewalls and, preferably, only one row of opening in the sidewalls and optionally an annular top flange.

5. An apparatus according to any of the preceding claims wherein the apparatus is provided with at least one of the following features:
- means for circulating cooling water in the tank, preferably in the same or opposite direction with respect to the rotating means,
- means for adjusting the height of the rotating distributor in relation to the upper level of the cooling fluid in the cooling tank,
- means for removing the granulated material from the cooling tank,
- means for controlling the rotation of the distributor within the range of 1-50 rpm,
- means for regulating the flow of liquid material from the feeding means to the distributor,
- circular openings at the lower end of the sidewalls having a diameter of 10-30 mm, preferably 12-20 mm,
- elliptical openings having a height to with ratio (h/w) in the range of from 1:1.2 to 1:10,
- only one row of openings and, preferably, not more than 4 openings,
- openings directed 0°- 45° upwards,
- openings directed 0°- 45° downwards,
- an intermediate receptor or a chute for supplying the liquid material to the feeding means,
- a refractory safety plate positioned below the long nozzle, which plate spreads the liquid stream over the cooling water surface in case of a nozzle breakage.

6. An apparatus according to claim 1 wherein the means for feeding the liquid material to the rotating distributor is positioned above the tank which is provided with cylindrical sidewalls, the feeding means are positioned at the centreline of said cylindrical sidewalls, the rotating distributor comprises a circular tundish and an elongated nozzle attached centrally thereto, the elongated nozzle has not more than 4 circular openings having a diameter of 10-20 mm in one row, optionally there is provided an intermediate receptor or a chute for supplying a controlled amount of liquid material to the tundish.

7. An apparatus according to claim 6 wherein the apparatus is provided with a weighing system for the tundish that automatically controls the level in the tundish in order to maintain a constant liquid head and thereby a constant flow rate through the nozzle.

8. A method of producing granulated material by disintegrating liquid metal or slag, the method comprises the steps of:
g) providing an apparatus according to any of the preceding claims,
h) rotating the distributor at a speed of 1- 50 rpm,
i) feeding the molten material to the rotating distributor,
j) distributing at least on stream of the molten material over the cooling fluid in the cooling tank,
k) disintegrating the molten material above and/or within the cooling liquid and forming at least partly solidified granules,
1) recovering the granulated material from the bottom of the cooling tank.

9. A method of producing granulated material according to claim 7 wherein the method comprises at least one of the following features:
- using water with or without additions as the cooling fluid,
- rotating the distributor at a speed of 1-10 rpm,
- feeding the molten material at a rate of 0.5 - 10 t/min, preferably 1-5 t/min,
- circulating cooling water in the tank, preferably in the same or opposite direction with respect to the rotating means,
- adjusting the height distance between the cooling water in the tank to the openings in the rotating distributor to be 0.1-1.5 m,
- controlling the melt level in the tundish and/or in the rotating distributor by controlling the flow from the means for feeding the liquid material to a rotating distributor,
- controlling the rate of granulation by controlling the level of the melt in the tundish and/or in the rotating distributor,
- recovering the solidified granules by discharging from the lower end of the tank using a water and air ejector,
- controlling the rate of granulation by controlling the level of the liquid slag or metal in the tundish and/or in the rotating distributor

10. A method of producing granulated material according to any claim 8 or 9 wherein the granulated material a metal or alloy selected from the group of iron, pig iron, steel, ferroalloy, recycled steel dust, copper, zinc and aluminium.

11. A method of producing granulated material according to any of claims 8-10 wherein the molten material is fed at a rate of 1-5 t/min to a rotating tundish provided with an elongated nozzle having one row of openings wherein the number of openings is 1-4 and the rate of granulation is controlled by controlling the melt level in the tundish.

12. A method of producing granulated material according to any of the preceding claims wherein the granulated material is selected from the group of iron, pig iron, steel, ferroalloy and recycled steel dust and the silicon content of said material is controlled to be 0.1-0.5%, preferably 0.25 - 0.35 %.

13. A granulated material obtainable with the method of any of claims 8-12 wherein the granulated material has a mean size in the range of 12-50 mm, preferably 15-25 mm and wherein the amount of fines having a size of less than 6 mm is limited to 5 %.

14. A granulated material according to claim 13 wherein the granulated material is selected from the group of iron, pig iron, steel and ferroalloy.

15. A granulated material according to claim 13 or 14 having a mean size of 13-18 mm and wherein the amount of fines having a size of less than 6 mm is limited to 3 % and wherein the amount of fines having a size of less than 4 mm is limited to less than 1 %.
